(19) Europäisches Patentamt
European Patent Office
Office européen des brevets

(11) **EP 4 307 218 A1**

(12) **EUROPEAN PATENT APPLICATION**

(43) Date of publication:
**17.01.2024 Bulletin 2024/03**

(21) Application number: **22306046.8**

(22) Date of filing: **12.07.2022**

(51) International Patent Classification (IPC):
**G06T 7/00** (2017.01)     **G06V 10/46** (2022.01)
**G06V 10/82** (2022.01)     **G06V 20/70** (2022.01)

(52) Cooperative Patent Classification (CPC):
**G06V 20/70; G06V 10/46; G06V 10/82;**
G06V 2201/031

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Guerbet**
**93420 Villepinte (FR)**

(72) Inventors:
• **ABI NADER, Clément**
  **75020 PARIS (FR)**
• **VÉTIL, Rebecca**
  **85180 CHÂTEAU D'OLONNE (FR)**
• **ROHÉ, Marc-Michel**
  **75011 PARIS (FR)**

(74) Representative: **Plasseraud IP**
**66, rue de la Chaussée d'Antin**
**75440 Paris Cedex 09 (FR)**

(54) **METHOD FOR CLASSIFYING A MEDICAL IMAGE OF AN ORGAN OF A PATIENT**

(57)     The invention relates to a method implemented by computer means for a method implemented by computer means for classifying at least one medical image of at least an organ of a patient, said method including an inference phase comprising the following iterative steps:
(a) segmenting at least one area of interest of said image, said area representing at least one an area of said organ,
(b) extracting at least one feature from said area of interest,
(c) classifying said area of interest on the basis of said feature,
(d) outputting said class of said area of interest.

FIG. 2

EP 4 307 218 A1

**Description**

FIELD OF THE INVENTION

The present invention relates to a method implemented by computer means for classifying at least one medical image of at least an organ of a patient.

BACKGROUND OF THE INVENTION

Pancreas cancer is characterized by a low 5-year survival rate (5-10 %) due to a late diagnosis. Indeed, the early stages of the disease are asymptomatic or dominated by non-specific symptoms. Moreover, at these stages potential tumors are either small (<2cm) or isodense which makes it difficult for radiologists to detect them. Therefore, the disease is not diagnosed, the cancer develops and when it is well-advanced, surgical intervention are no longer possible, such intervention remaining the only curative treatment. It was found that only 10% of patients are available for surgery.

Given this context it is critical to diagnose the disease at early stages to increase the eligibility to surgery and therefore the overall survival rate. Lately, many studies have shown that there exist predictive signs of pancreas cancer visible on CT (computed tomography) images up to 15 months before the cancer diagnosis. One of the most important of these signs is the dilatation of the main pancreatic duct which should alert radiologists of the potential presence of a tumoral mass and push them to prescribe complementary exams to the patient. However, detecting this sign is difficult as the main pancreatic duct is a small structure within the pancreas and can easily be overlooked especially when checking an entire CT abdominal scan.

Currently the only manner to detect the dilatation of the main pancreatic duct is to carefully review the CT scan, manually measure the duct diameter on the image and compare it with standard values. However, this is a tedious task, and all the radiologists are not aware of the importance to look for such a sign. Moreover, as pancreas cancer remains a rare disease and radiologists are pressured by many exams to review in a short time, they will not necessarily check for this crucial sign.

As there is currently no automatic tool to detect its dilatation based on the analysis of portal CT scanners, the invention proposes a pipeline to automatically analyze this type of image and detect the dilatation of the main pancreatic duct.

Such pipeline may also be useful to detect other diseases based on other organs of a patient.

SUMMARY OF THE INVENTION

To that aim, the present document proposes a method implemented by computer means for classifying at least one medical image of at least an organ of a patient, said method including an inference phase comprising the following iterative steps:

(a) segmenting at least one area of interest of said image, said area representing at least one an area of said organ,

(b) extracting at least one feature from said area of interest,

(c) classifying said area of interest on the basis of said feature,

(d) outputting said class of said area of interest.

In digital image processing and computer vision, image segmentation is a method aiming at partitioning a digital image into at least one segment or sets of pixels. More precisely, image segmentation is the process of assigning a label to every pixel or voxel in an image such that pixels with the same label share certain characteristics.

In the context of the present document, the result of step (a) is a set of pixels or voxels belonging to the corresponding area of said organ.

Moreover, in digital image processing and computer vision, a feature is a piece of information about the content of an image, typically about whether a certain region of the image has certain properties. Features may be specific structures in the image such as points, edges or objects. Features may also be the result of a general neighbourhood operation or feature detection applied to the image. Other examples of features are related to motion in image sequences, or to shapes defined in terms of curves or boundaries between different image regions.

More broadly a feature is any piece of information which is relevant for solving the computational task related to a certain application. This is the same sense as feature in machine learning and pattern recognition generally, though image processing has a very sophisticated collection of features.

In the context of the invention, classification is the problem of identifying which of a set of categories or classes an observation (here the area of interest) belongs to. Said classes may comprise a first class or normal class and a second class or abnormal class.

The present disclosure thus proposes a pipeline where the classification is performed on features extracted from segmented area of an input image, instead of directly classifying said input image.

Such pipeline allows a better detection of the different classes on areas of medical images that are usually difficult to classify.

The images may be CT-scan images, for example portal CT-scan images.

The image may be provided by other radiological modalities as MRI, PET/CT or PET/MR.

The organ may be a pancreas.

At least one area of interest may comprise an area representing the main pancreatic duct.

The at least one area of interest may comprise an area representing the pancreas.

The at least one area of interest may comprise an area representing a pancreatic lesion.

Segmenting the pancreas and/or any pancreatic lesion in addition to the main pancreatic duct helps to obtain more specific results and to ensure that when segmenting the main pancreatic duct, said duct will not be mixed with a part of the pancreas or a part of a lesion for instance.

Step (a) may be performed using a fully convolutional neural network.

The fully convolutional neural network may be a nnUNet.

The nnUNet automatically designs a segmentation pipeline based on a UNet architecture by relying on heuristics applied on the data that allow it to estimate key parameters. The dataset properties are estimated to automatically perform a pre-processing step. This is followed by the automatic definition of design choices for the model (number of layers, convolutional kernel sizes, convolutional blocks, etc...). A training procedure is also implemented (data augmentation, scheduled learning rate, etc...).

Step (b) may be performed by size and shape-based features, descriptors of the image intensity histogram and/or descriptors of the relationships between image voxels, using radiomics.

In the field of medicine, radiomics is a method that extracts a large number of features from medical images using data-characterization algorithms. These features, termed radiomic features, have the potential to uncover patterns and characteristics on images that fail to be appreciated by the naked eye.

It appears that these sets of parameters are the most relevant to the application of this document.

Radiomic features can be divided into five groups:

- size and shape based-features,
- descriptors of the image intensity histogram,
- descriptors of the relationships between image voxels (e.g. gray-level co-occurrence matrix (GLCM), run length matrix (RLM), size zone matrix (SZM), and neighborhood gray tone difference matrix (NGTDM) derived textures),
- textures extracted from filtered images, and
- fractal features.

The mathematical definitions of these features are independent of imaging modality and can be found in the literature:

- Galloway, Mary M (1975). "Texture analysis using gray level run lengths". Computer Graphics and Image Processing. 4 (2): 172-179. doi:10.1016/S0146-664X(75)80008-6.
- Pentland AP (June 1984). "Fractal-based description of natural scenes". IEEE Transactions on Pattern Analysis and Machine Intelligence. 6 (6): 661-74. doi:10.1109/TPAMI.1984.4767591. PMID 22499648. S2CID 17415943.
- Amadasun M, King R (1989). "Textural features corresponding to textural properties". IEEE Transactions on Systems, Man, and Cybernetics. 19 (5): 1264-1274. doi:10.1109/21.44046.
- Thibault G, Angulo J, Meyer F (March 2014). "Advanced statistical matrices for texture characterization: application to cell classification". IEEE Transactions on Bio-Medical Engineering. 61 (3): 630-7. doi:10.1109/TBME.2013.2284600. PMID 24108747. S2CID 11319154.

Step (c) may be performed by using a Support Vector Machine classifier.

Step (c) may be performed by using a Support Vector Machine classifier with a Radial Basis Function kernel.

Due to the high variety of available features, feature reductions may be implemented to eliminate redundant information. Additionally, features that are unstable and non-reproducible may be eliminated since features with low-fidelity will likely lead to spurious findings and unrepeatable models.

Such reduction or selection of features improves the performance of the classification in the next step.

To this aim, said method may comprise a training phase where said feature of step (b) is selected by quantifying the distribution of said feature in each of said classes and by selecting the feature if said feature has a statistically significant difference of distribution between said classes.

The difference of distribution between said classes may be quantified using the Student's T-Test.

The Student's t-test is a statistical test for comparing the means of two groups of samples. The purpose of the test is to determine whether the means of the two groups are statistically significantly different.

Said method may comprise a training phase wherein said feature of step (b) is selected by performing a hierarchical clustering analysis.

In data mining and statistics, hierarchical clustering (also called hierarchical cluster analysis or HCA) is a method of cluster analysis which seeks to build a hierarchy of clusters.

Strategies for hierarchical clustering generally fall into two types:

- Agglomerative: This is a "bottom-up" approach: each observation starts in its own cluster, and pairs of clusters are merged as one moves up the hierarchy.
- Divisive: This is a "top-down" approach: all observations start in one cluster, and splits are performed recursively as one moves down the hierarchy.

The results of hierarchical clustering are usually presented in a dendrogram.

In order to decide which clusters should be combined (for agglomerative approach), or where a cluster should be split (for divisive approach), a measure of dissimilarity between sets of observations is required. Such measure may be achieved by use of an appropriate metric (a measure of distance between pairs of observations), and a linkage criterion which specifies the dissimilarity of sets as a function of the pairwise distances of observations in the sets.

The choice of an appropriate metric will influence the shape of the clusters, as some elements may be relatively closer to one another under one metric than another.

Some known metrics for hierarchical clustering are:

- the Euclidean distance
- the Squared Euclidean distance
- the Manhattan (or city block) distance
- the Maximum distance (or Chebyshev distance)
- the Mahalanobis distance

The hierarchical clustering analysis may be performed using single linkage clustering.

In statistics, single-linkage clustering is one of several methods of hierarchical clustering. It is based on grouping clusters in bottom-up fashion (agglomerative clustering), at each step combining two clusters that contain the closest pair of elements not yet belonging to the same cluster as each other.

Said cluster may be formed using the correlation distance.

Said distance is given by the formula:

$$1 - \frac{(u - \bar{u}).(v - \bar{v})}{\|u - \bar{u}\|_2 \|v - \bar{v}\|_2}$$

where:

u and v are vectors containing all the elements belonging to cluster u and v,

$\bar{u}$ and $\bar{v}$ are the mean of the values composing vectors u and v,

and . is the dot product between u and v.

The use of the correlation distance instead of other available metrics allows to evaluate the redundancy between features and therefore eliminate highly correlated features which do not bring any additional value to the model.

The present document also proposes a computer software, comprising instructions to implement at least a part of the method according to any of the preceding claims when the software is executed by a processor.

The present document also proposes a computer device comprising:

- an input interface to receive medical images,
- a memory for storing at least instructions of a computer program according to preceding claims,
- a processor accessing to the memory for reading the aforesaid instructions and executing then the method according to the present document,
- an output interface to provide the class of said area of interest.

The present document also proposes a computer-readable non-transient recording medium on which a computer software is registered to implement the method according to the present document, when the computer software is executed by a processor.

BRIEF DESCRIPTION OF THE DRAWINGS

Other features, details and advantages will be shown in the following detailed description and on the figures, on which:

- figure 1 shows schematically an example of a computer device according to the invention,
- figure 2 shows schematically the steps of the training and test phases of the method according to the present document,
- figure 3 shows schematically the steps of the inference phase of the method according to the present document,
- figure 4 illustrates the segmentation step of the organ on a CT-scan image, here the pancreas of a patient,
- figure 5 is a dendrogram illustrating the results of a hierarchical clustering analysis and showing the correlation between features,
- figure 6 shows the ROC curve for the main pancreatic duct classification step,
- figure 7 shows the confusion matrix of said classification step.

The annexed drawing includes meaningful colors. Although the present application is to be published in black and white, a colored version of the annexed drawing was filed before the EPO.

DETAILED DESCRIPTION OF A PREFERRED EMBODIMENT

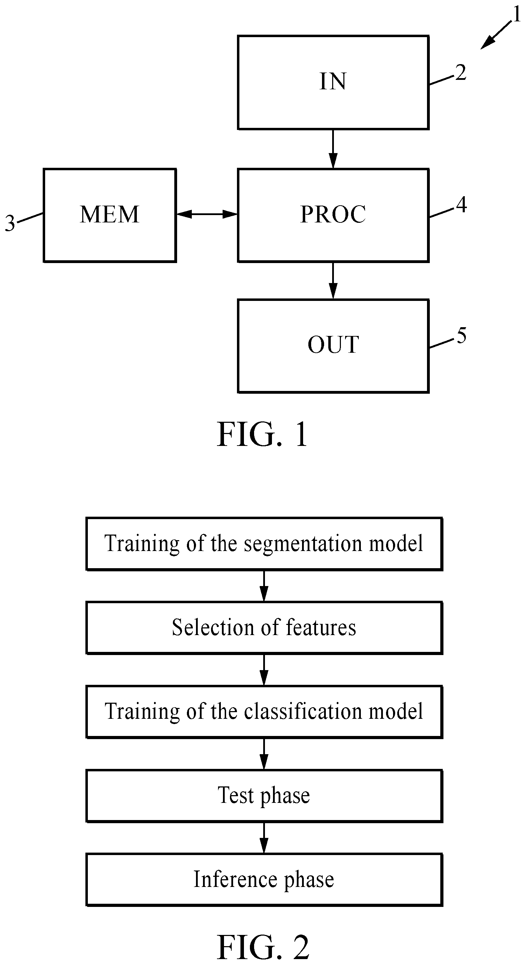

Figure 1 schematically shows an example of a computer device 1 according to the invention. Said computer device 1 comprises:

- an input interface 2,

- a memory 3 for storing at least instructions of a computer program,

- a processor 4 accessing to the memory 3 for reading the aforesaid instructions and executing the method according to the invention,

- an output interface 5.

Figure 2 schematically shows the steps of a training phase and a test phase of the method according to the present document, executed by the computer device.

Training of the segmentation model

The training phase comprises a first step of training a segmentation model.

In this step, a database of 660 portal CT-scans images is used as training set. For each image of said training set, the pancreas, pancreatic lesions and the main pancreatic duct were annotated by the radiologists. In other words, the corresponding pixels of each image of the training set are annotated by a radiologist to assign to each pixel at least one label, called ground-truth label, here the label pancreas, the label pancreatic lesion or the main pancreatic duct label.

To improve the performances, the images are cropped around the pancreas to help the model focus on this organ.

The segmentation model is a nnUNet ("nnU-Net: Self-adapting Framework for U-Net-Based Medical Image Segmentation", Iseense et al., 28 Sept 2018) implemented following the code provided at the link https://github.com/MIC-DKFZ/nnUNet.

Said model is a fully convolutional neural network and is trained on the training dataset. Said trained model is able to segment each of the three structures (pancreas, lesions, main pancreatic duct).

After training, the trained segmentation model is saved in the memory with its hyperparameters.

Segmenting these three structures instead of only the main pancreatic duct helps to obtain more specific results and to ensure that when segmenting the main pancreatic duct, said duct will not be mixed with a part of the pancreas or a part of a lesion for instance.

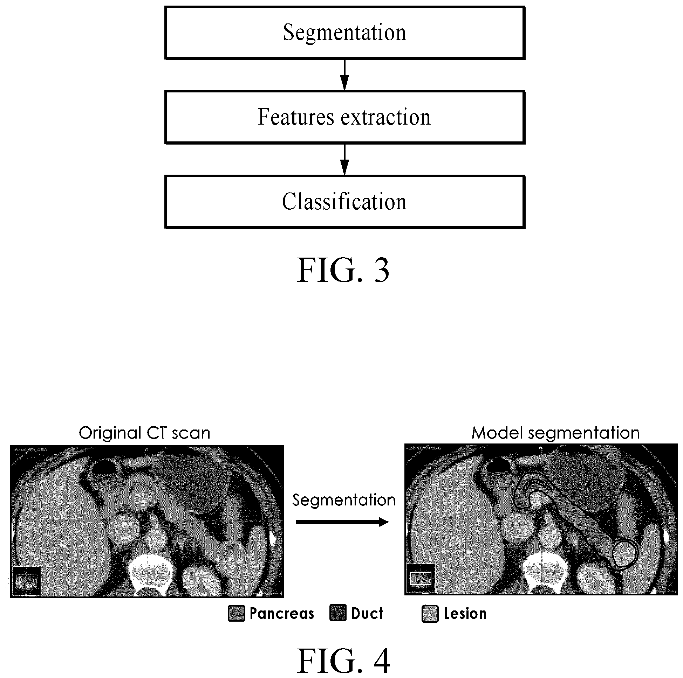

Figure 4 illustrates, on the left, an example of an image of the training set and, on the right, the results of the segmentation step using said trained segmentation model.

The pixels belonging the pancreas are shown in red, the pixels belonging to the main pancreas duct are shown in blue and the pixels belonging to the lesion are shown in green.

Such trained model is used to segment the main pancreatic duct for each image of the training set.

Selection of features

For each segmented main pancreatic duct, features may be extracted within the region delimited by the segmentation (blue region in figure 4).

The features are computed using radiomics and belong to three different families of features, i.e. size and shape-based features, descriptors of the image intensity histogram and/or descriptors of the relationships between image voxels.

The pyradiomics library (version 3.0.1 dated 11 Oct 2020 - https://github.com/AIM-Harvard/pyradiomics) is used to compute said features.

The feature selection step aims to select the most relevant features from the 108 available features in these three families. Such selection improves the performance of the classification model.

Each image of the training set is also associated with a ground-truth label given by the radiologists on whether or not the main pancreas duct is dilated (abnormal case) or non-dilated (normal case).

In order to proceed to said feature selection, for each of said 108 features, we compute the distribution for the dilated and non-dilated groups and run a Student's T-Test. One known metric of this test is the p-value, indicating the degree of significativity. If the p-value is low, this means that the two groups have a distribution that is statistically different for the corresponding feature.

The corresponding feature may thus be preselected if the p-value is under a threshold, for example 0.01. if not, said feature may be eliminated.

Then, during the feature selection process, a hierarchical clustering analysis is performed to group correlated features, as seen on figure 3. Such analysis is made for all the preselected features and, if groups of features have a correlation greater or equal to a threshold, for example 0.95, only one feature from this group is finally selected and the other features from the same group are removed.

The criterion to choose a feature within a group of correlated features is based on the range of values. The feature that has the largest range of values is kept and the others are eliminated.

Only 44 features from the above-mentioned 108 features are then selected.

The 44 selected features of said library are (divided by groups) :

Size or shape-based - 3D features: SurfaceVolumeRatio, Sphericity, MajorAxisLength, Maximum2DDiameterColumn, MinorAxisLength, Maximum2DDiameterSlice, LeastAxisLength, Elongation, Maximum2DDiameterRow, Flatness

Intensity histogram - 1st order statistics: 10Percentile, Minimum, Variance, Uniformity, Range, 90Percentile, Maximum, Energy, TotalEnergy, Skewness.

Relationships between image voxels - Gray Level Co-occurrence Matrix (GLCM): Contrast, DifferenceAverage, ClusterProminence, ClusterShade, Correlation

Relationships between image voxels - Gray Level Run Length Matrix (GLRLM): LongRunHighGrayLevelEmphasis, RunVariance

Relationships between image voxels - Gray Level Size Zone (GLSZM): LargeAreaEmphosis, LargeAreaLowGrayLevelEmphasis, LargeAreaHighGrayLevelEmphasis, GrayLevelNonUniformity, SizeZoneNonUniformity

Relationships between image voxels - Neighbouring Gray Tone Difference Matrix (NGTDM): Complexity, Busyness, Contrast, Coarseness,

Relationships between image voxels - Gray Level Dependence Matrix (GLDM): LargeDependenceLowGrayLevelEmphasis, LargeDependenceHighGrayLevelEmphasis, SmallDependenceEmphasis, DependenceNonUniformityNormalized, SmallDependenceHighGrayLevelEmphasis, DependenceVariance, LargeDependenceEmphasis, DependenceNonUniformity

Training of the classification model

The selected features of each segmented pancreas of the training set are computed. Said features and the corresponding dilated or non-dilated labels are used to train an SVM classifier with an RBF kernel.

The use of an SVM classifier with an RBF kernel is for example disclosed in the article "SVM Classification with Linear and RBF kernels", Vasileios Apostolidis-Afentoulis et al., July 2015.

More particularly said n features (where n is here for instance equal to 44) are inputted as an n-dimensional tensor into the SVM classifier. The classes to be predicted by the SVM classifier are the above-mentioned dilated class (abnormal case) or non-dilated class (normal case).

The Support Vector Machine algorithm is effective for balanced classification, although it does not perform well on imbalanced datasets.

The SVM algorithm finds a hyperplane decision boundary that best splits the examples into two classes. The split is made soft through the use of a margin that allows some points to be misclassified. By default, this margin favors the majority class on imbalanced datasets, although it can be updated to take the importance of each class into account and dramatically improve the performance of the algorithm on datasets with skewed class distributions.

This modification of SVM that weighs the margin penalty proportional to the class importance is often referred to as weighted SVM, or cost-sensitive SVM.

Thus, in the case of an imbalanced training dataset, said imbalance between the dilated and non-dilated cases in the training set may be compensated during said training to avoid biasing of the classifier.

Such compensation may be easily implemented using available libraries, such as the scikit-learn library.

After training, the trained classification SVM model with its hyperparameters is saved in the memory.

Test phase

After the training phase, a test set of portal CT-scan images is used for the test phase. The test set is composed of 281 images. The images of the test set are independent from the images of the training set.

The following steps are performed for each image of the test set:

- main pancreatic duct segmentation based on the previously trained segmentation model,
- extraction of the n selected features (here n equal to 44) of the segmented main pancreatic duct,
- classify the corresponding n-dimensional tensor representing said n feature using the classifier model to predict if the main pancreatic duct is dilated or not.

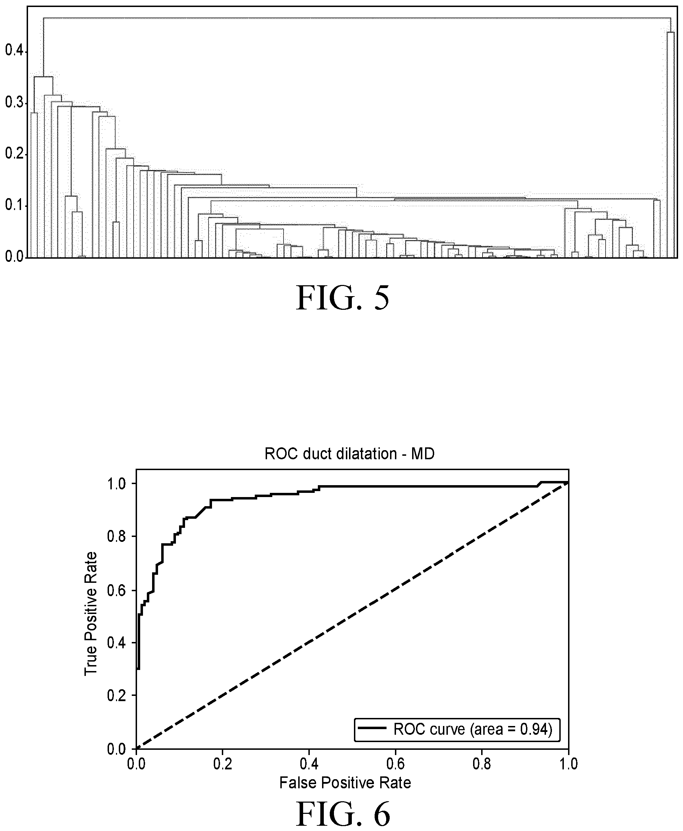

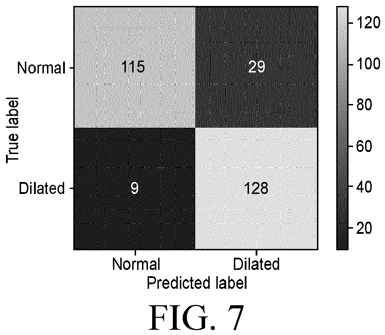

Figure 6 and figure 7 show the obtained results, respectively through a diagram showing respectively the ROC (receiver operating characteristic) curve and the confusion matrix. The test phase confirms that the obtained pipeline is able to predict with a good accuracy the dilatation or the absence of dilatation of the main pancreatic duct

Indeed, figure 6 shows a high Area Under the Curve (AUC) of 94%.

Moreover, based on the confusion matrix of figure 7, the proposed pipeline has a sensitivity, specificity, and precision of 87%, 80% and 87% respectively. This high sensitivity underlines the ability of the pipeline to systematically detect the main pancreatic duct dilatation which is critical for early patient management.

The test phase confirms that the obtained pipeline is able to predict with a good accuracy the presence or the absence of dilatation of the main pancreatic duct. In other words, the trained models are able to generalize to new images that have never been seen by these models during the training phase or the test phase.

Inference phase

The steps performed during the inference phase is similar to the steps performed during the test phase. The difference in the case of the inference phase is that the input data is made from new images of patient. Said phase therefore refers to the deployment of said pipeline, and the application of its scoring in real production situations based on field data.

Thus, in order to predict the main pancreatic duct dilatation of a patient, the following steps are performed for one or more portal CT-scan images of said patients:

- main pancreatic duct segmentation of each image based on the previously trained segmentation model,
- extraction of the n selected features (here n equal to 44) of the segmented main pancreatic duct,
- classify the corresponding n-dimensional tensor representing said n feature using the classifier model to predict if the main pancreatic duct is dilated or not,
- outputting the predicted class.

Said predicted class may then be interpreted by a radiologist to determine the potential presence of a tumoral mass and the need of prescribing complementary exams to the patient.

**Claims**

1. A method implemented by computer means for classifying at least one medical image of at least an organ of a patient, said method including an inference phase comprising the following iterative steps:

   (a) segmenting at least one area of interest of said image, said area representing at least one an area of said organ,
   (b) extracting at least one feature from said area of interest,
   (c) classifying said area of interest on the basis of said feature,
   (d) outputting said class of said area of interest.

2. The method according to preceding claim, wherein the images are CT-scan images.

3. The method according to any of the preceding claims, wherein the organ is a pancreas.

4. The method according to the preceding claims, wherein the at least one area of interest comprises an area representing the main pancreatic duct.

5. The method according to claim 3 or 4, wherein the at least one area of interest comprises an area representing the pancreas.

6. The method according to any of the claims 3 to 5, wherein the at least one area of interest comprises an area representing a pancreatic lesion.

7. The method according to any of the preceding claims, wherein step (a) is performed using a fully convolutional neural network.

8. The method according to the preceding claim, wherein the fully convolutional neural network is a nnUNet.

9. The method according to any of the preceding claims, wherein step (b) is performed by extracting size and shape-based features, descriptors of the image intensity histogram and/or descriptors of the relationships between image voxels, using radiomics.

10. The method according to any of the preceding claims, wherein step (c) is performed by using a Support Vector Machine classifier.

11. The method according to claim 9, wherein step (c) is performed by using a Support Vector Machine classifier with a Radial Basis Function kernel.

12. The method according to any of the preceding claims, wherein said method comprises a training phase where said feature of step (b) is selected by quantifying the distribution of said feature in each of said class and by selecting the feature if said feature has a statistically significant difference of distribution between said classes.

13. The method according to the preceding claim, wherein the difference of distribution between said classes is quantified using the Student's T-Test.

14. The method according to any of the preceding claims, wherein said method comprises a training phase wherein said feature of step (b) is selected by performing a hierarchical clustering analysis.

15. The method according to preceding claim, wherein the hierarchical clustering analysis is performed using single linkage clustering.

IN ⟋2

1

MEM ⟵⟶ PROC ⟋4

3

OUT ⟋5

## FIG. 1

Training of the segmentation model

Selection of features

Training of the classification model

Test phase

Inference phase

## FIG. 2

```
┌─────────────────────────────────────┐
│            Segmentation              │
└─────────────────────────────────────┘
                   │
                   ▼
┌─────────────────────────────────────┐
│         Features extraction          │
└─────────────────────────────────────┘
                   │
                   ▼
┌─────────────────────────────────────┐
│            Classification            │
└─────────────────────────────────────┘
```

# FIG. 3

Original CT scan                    Model segmentation

Segmentation →

■ Pancreas  ■ Duct     ■ Lesion

# FIG. 4

FIG. 5

ROC duct dilatation - MD

FIG. 6

FIG. 7

**EP 4 307 218 A1**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REZAEI ZAHRA: "A review on image-based approaches for breast cancer detection, segmentation, and classification", EXPERT SYSTEMS WITH APPLICATIONS, vol. 182, 1 November 2021 (2021-11-01), page 115204, XP093005718, AMSTERDAM, NL ISSN: 0957-4174, DOI: 10.1016/j.eswa.2021.115204 * abstract; paragraphs [2.2.1], [2.2.5.1]; tables 1,2,3 * | 1-15 | INV. G06T7/00 G06V10/46 G06V10/82 G06V20/70 |
| X | BAKASA WILSON ET AL: "Pancreatic Cancer Survival Prediction: A Survey of the State-of-the-Art", COMPUTATIONAL AND MATHEMATICAL METHODS IN MEDICINE, vol. 2021, 30 September 2021 (2021-09-30), pages 1-17, XP093006165, ISSN: 1748-670X, DOI: 10.1155/2021/1188414 Retrieved from the Internet: URL:https://downloads.hindawi.com/journals/cmmm/2021/1188414.pdf> * introduction, abstract; figures 1, 3 * | 1-6 | |
| A | ISENSEE FABIAN ET AL: "nnU-Net: a self-configuring method for deep learning-based biomedical image segmentation", NATURE METHODS, vol. 18, no. 2, 7 December 2020 (2020-12-07), pages 203-211, XP037359671, ISSN: 1548-7091, DOI: 10.1038/S41592-020-01008-Z * the whole document * | 8 | |

**TECHNICAL FIELDS SEARCHED (IPC)**

G06T
G06V

-/--

The present search report has been drawn up for all claims

| Place of search | Date of completion of the search | Examiner |
|---|---|---|
| The Hague | 9 December 2022 | Lepetit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 22 30 6046

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PRAJAPATI G L ET AL: "On Performing Classification Using SVM with Radial Basis and Polynomial Kernel Functions", EMERGING TRENDS IN ENGINEERING AND TECHNOLOGY (ICETET), 2010 3RD INTERNATIONAL CONFERENCE ON, IEEE, 19 November 2010 (2010-11-19), pages 512-515, XP031978406, DOI: 10.1109/ICETET.2010.134 ISBN: 978-1-4244-8481-2 * paragraph [00II] * ----- | 11 | |
| A | KHALID SAMINA ET AL: "A survey of feature selection and feature extraction techniques in machine learning", 2014 SCIENCE AND INFORMATION CONFERENCE, THE SCIENCE AND INFORMATION (SAI) ORGANIZATION, 27 August 2014 (2014-08-27), pages 372-378, XP032655132, DOI: 10.1109/SAI.2014.6918213 ISBN: 978-0-9893193-3-1 [retrieved on 2014-10-07] * paragraph [IV.A] * ----- | 12,13 | |
| A | MURTAGH F.: "A Survey of Recent Advances in Hierarchical Clustering Algorithms", COMPUTER JOURNAL., vol. 26, no. 4, 1 November 1983 (1983-11-01), pages 354-359, XP093005952, GB ISSN: 0010-4620, DOI: 10.1093/comjnl/26.4.354 Retrieved from the Internet: URL:https://academic.oup.com/comjnl/article-pdf/26/4/354/1072603/26-4-354.pdf> * introduction * ----- | 15 | TECHNICAL FIELDS SEARCHED (IPC) |

The present search report has been drawn up for all claims

| Place of search | Date of completion of the search | Examiner |
|---|---|---|
| The Hague | 9 December 2022 | Lepetit, Nicolas |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GALLOWAY, MARY M.** Texture analysis using gray level run lengths. *Computer Graphics and Image Processing,* 1975, vol. 4 (2), 172-179
- **PENTLAND AP.** Fractal-based description of natural scenes. *IEEE Transactions on Pattern Analysis and Machine Intelligence,* June 1984, vol. 6 (6), 661-74

- **AMADASUN M ; KING R.** Textural features corresponding to textural properties. *IEEE Transactions on Systems, Man, and Cybernetics,* 1989, vol. 19 (5), 1264-1274
- **THIBAULT G ; ANGULO J ; MEYER F.** Advanced statistical matrices for texture characterization: application to cell classification. *IEEE Transactions on Bio-Medical Engineering,* March 2014, vol. 61 (3), 630-7